# EUROPÄISCHE PATENTSCHRIFT

(11) **EP 1 233 209 B1**
(45) Veröffentlichungstag und Bekanntmachung des Hinweises auf die Patenterteilung: **10.03.2004**
(21) Anmeldenummer: 01810071.9
(22) Anmeldetag: 25.01.2001
(51) Int. Cl.: F16H 19/00, B23Q 5/38

(54) **Verschiebeeinrichtung mit einem in eine Zahnstange eingreifenden Zahnriemen**
Displacement device with a toothed belt engaging a gear rack
DIspositif de déplacement comprenant une courroie dentée engrenant avec une crémaillère

(43) Veröffentlichungstag der Anmeldung: 21.08.2002
(73) Patentinhaber: Tecan Trading AG, 8708 Männedorf (CH)
(72) Erfinder: Schinzel, Fred, 8708 Männedorf (CH)
(74) Vertreter: OK pat AG

(56) Entgegenhaltungen:
- EP-A- 0 150 058
- EP-A- 0 446 977
- DE-C- 3 433 363
- FR-A- 2 547 635
- US-A- 4 600 358
- US-A- 5 819 584

## Beschreibung

### Technisches Gebiet

Die Erfindung betrifft eine Verschiebeeinrichtung gemäss dem Oberbegriff des Anspruchs 1. Derartige als allgemein bekannt zu geltende Verschiebeeinrichtungen können auf verschiedenen Gebieten eingesetzt werden wie etwa bei Laborgeräten, z. B. Pipettiereinrichtungen für chemische Analysen u. dgl..

### Stand der Technik

Es sind gattungsgemässe Verschiebeeinrichtungen bekannt, bei denen das als Zahnrad ausgebildete Antriebsrad unmittelbar mit der Zahnstange eingreift. Vor allem bei grösserer Länge der Zahnstange können jedoch Schwankungen des Abstandes oder der Winkellage zwischen derselben und der Achse des Zahnrades auftreten, was zu Geräuschentwicklung und Klemmen führen kann und die Genauigkeit der Positionierung und Gleichmässigkeit der Bewegung des Wagens beeinträchigt.

### Darstellung der Erfindung

Der Erfindung liegt die Aufgabe zu Grunde, eine gattungsgemässe Verschiebeeinrichtung anzugeben, welche geräuschlos und störungsfrei funktioniert und eine ruckfreie und genau steuerbare Bewegung des Wagens gewährleistet und dabei einfach aufgebaut ist. Diese Aufgabe wird durch die Erfindung, wie sie im Anspruch 1 gekennzeichnet ist, gelöst.

Die Vorteile der erfindungsgemässen Verschiebeeinrichtung kommen vor allem in Laborgeräten zum Tragen, wo die obengenannten Eigenschaften besonders erwünscht sind. Dass die Kraftübertragung ausserdem wartungsfrei ist, ist ein weiterer insbesondere bei einem Laborgerät wesentlicher Vorteil. Daher eignet sich die erfindungsgemässe Verschiebeeinheit hervorragend zum Verschieben von heb- und senkbare Pipetten tragenden Armen oder von Robotarmen zur Handhabung von Proberöhren, Mikrotiterplatten u. ä..

### Kurze Beschreibung der Zeichnungen

Im folgenden wird die Erfindung anhand von Figuren, welche lediglich Ausführungsbeispiele darstellen, näher erläutert.
Es zeigen
- Fig. 1: perspektivisch eine erfindungsgemässe Verschiebeeinrichtung mit mehreren Wagen,
- Fig. 2: perspektivisch einen Motor und einen Teil einer Antriebseinheit mit abgenommenen Gehäuseteilen eines Wagens der erfindungsgemässen Verschiebeeinrichtung nach Fig. 1,
- Fig. 3a: einen vertikalen Längsschnitt durch die Antriebseinheit,
- Fig. 3b: einen horizontalen Längsschnitt durch die Antriebseinheit entsprechend B-B in Fig. 3a und Draufsicht auf den Motor,
- Fig. 3c: einen Querschnitt durch die Antriebseinheit entsprechend C-C in Fig. 3a,
- Fig. 3d: einen Querschnitt durch die Antriebseinheit entsprechend D-D in Fig. 3a,
- Fig. 4: einen Teil der erfindungsgemässen Verschiebeeinrichtung, mit vertikalem Längsschnitt durch die Antriebseinheit,
- Fig. 5a: eine Draufsicht auf die Antriebseinheit und den Motor eines Wagens gemäss einer abgewandelten Ausführungsform der erfindungsgemässen Verschiebeeinrichtung nach Fig. 1,
- Fig. 5b: einen vertikalen Längsschnitt durch die Antriebseinheit entsprechend B-B in Fig. 5a,
- Fig. Sc: einen Querschnitt durch die Antriebseinheit entsprechend C-C in Fig. 5b und
- Fig. 6: einen Teil der erfindungsgemässen Verschiebeeinrichtung gemäss der abgewandelten Ausführungsform, mit vertikalem Längsschnitt durch die Antriebseinheit.

### Wege zur Ausführung der Erfindung

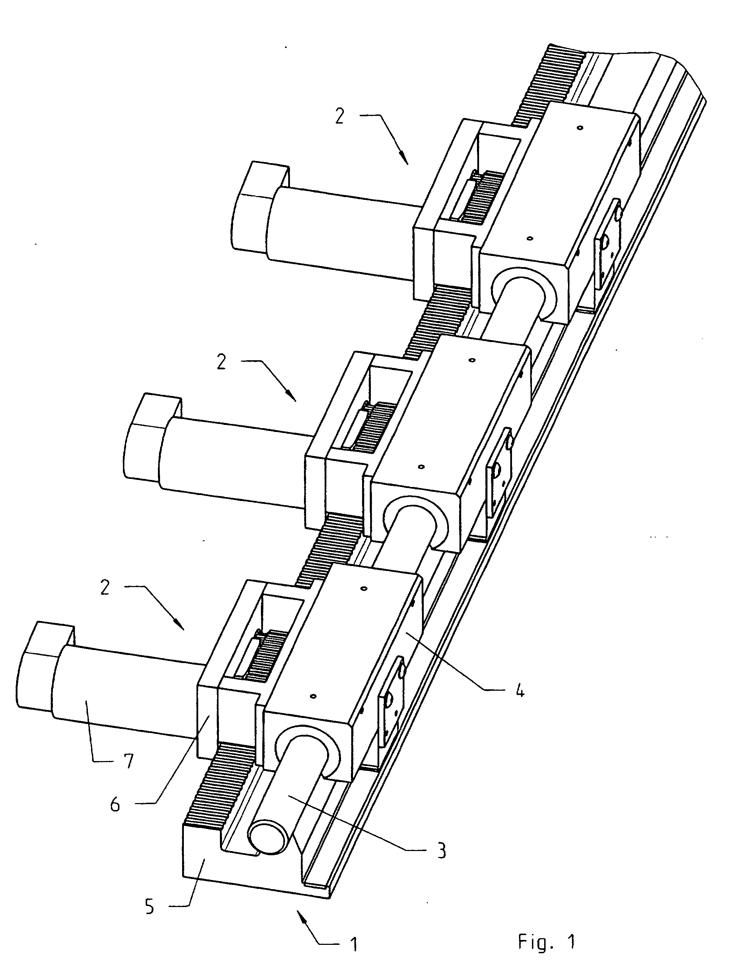

Die erfindungsgemässe Verschiebeeinrichtung weist (Fig. 1) eine Führung 1 auf, längs welcher mehrere Wagen 2 verschiebbar sind. Die Führung 1 umfasst eine als Führungsstange 3 runden Querschnitts ausgebildete Führungsschiene, mit welcher jeder der Wagen 2 mittels eines Schlittens 4 eingreift. Parallel zur Führungsstange 3 verläuft eine Zahnstange 5 mit nach oben weisender Verzahnung. Jeder der Wagen 2 weist eine an den Schlitten 4 anschliessende Antriebseinheit 6 und einen an diese anschliessenden Motor 7 zum Antrieb derselben auf.

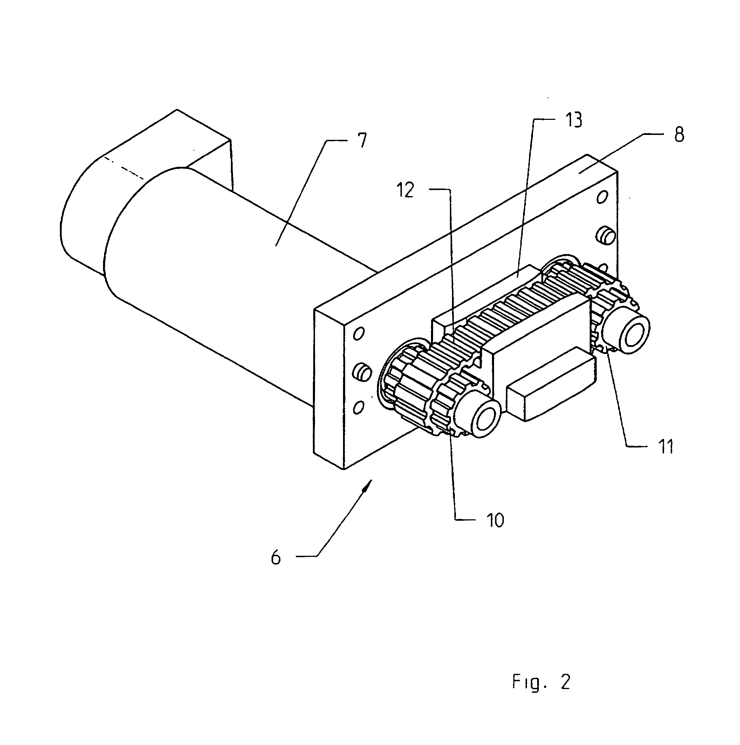

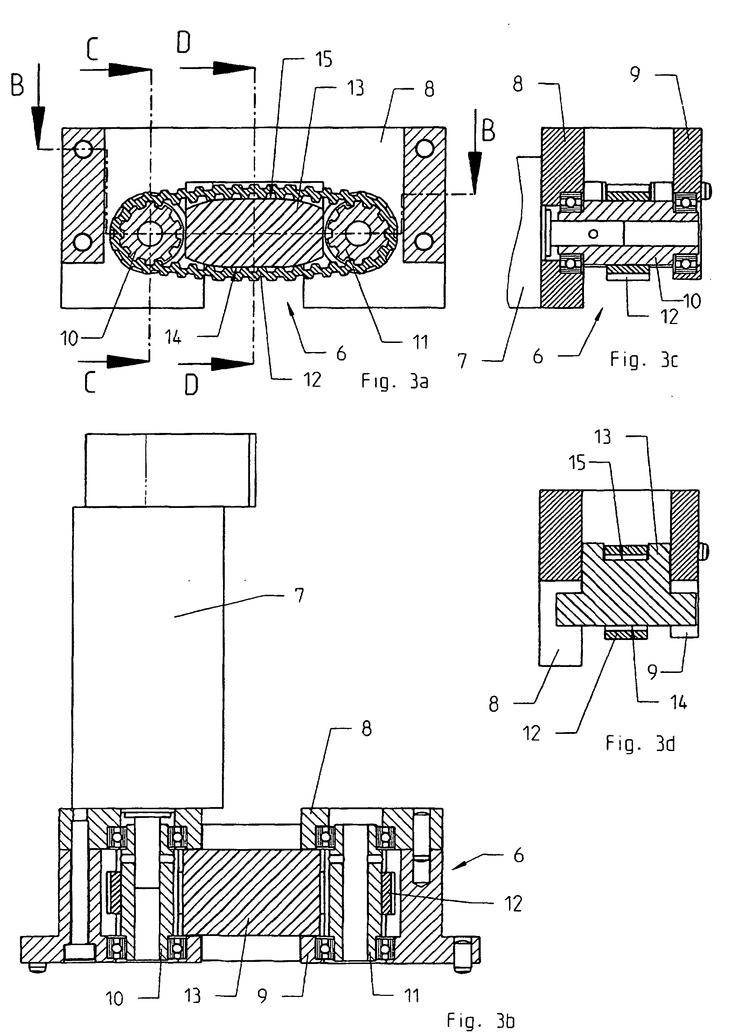

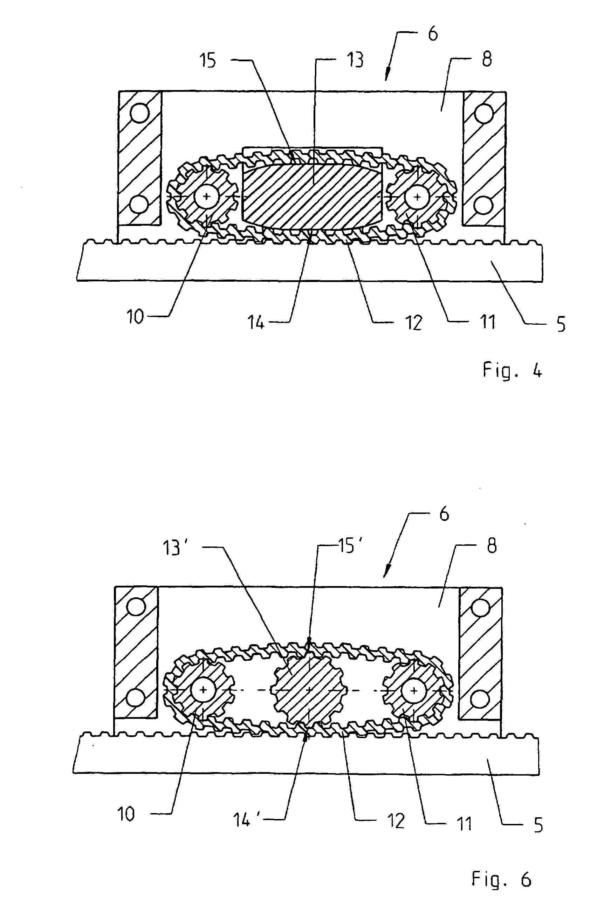

Wie aus Fig. 2, 3a-d ersichtlich, umfasst die Antriebseinheit 6 ein Gehäuse mit einer Grundplatte 8 und einer von derselben beabstandeten parallelen Deckplatte 9 und zwischen denselben ein als Zahnrad mit zur Zahnstange 5 senkrechter Achse ausgebildetes Antriebsrad 10, das an der zur Zahnstange 5 senkrechten Achse des Motors 7 befestigt ist und von demselben angetrieben wird. In Längsrichtung der Zahnstange 5 gegenüber dem Antriebsrad 10 versetzt ist, ebenfalls zwischen der Grundplatte 8 und der Deckplatte 9, ein Umlenkrad 11 angeordnet, das gleich wie das Antriebsrad 10, insbesondere ebenfalls als Zahnrad ausgebildet und dessen Achse ebenfalls senkrecht zur Zahnstange 5 ist. Das Antriebsrad 10 und das Umlenkrad 11 sind beide im Gehäuse drehbar, aber achsfest gelagert. Um das Antriebsrad 10 und das Umlenkrad 11 läuft ein Zahnriemen 12 aus elastischem Material, z. B. einem Kunststoff wie Polyurethan, der eine innere Verzahnung aufweist, welche mit den besagten Rädern eingreift sowie eine äussere Verzahnung, die mit der Verzahnung der Zahnstange 5 (s. Fig. 4) eingreift.

Zwischen dem Antriebsrad 10 und dem Umlenkrad 11 ist eine Andrückvorrichtung angeordnet, die ein als unverdrehbarer Andrückblock 13 ausgebildetes Antriebsteil umfasst, welches, abgesehen von Anschlägen, die seine Verschieblichkeit parallel zur Zahnstange 5 und parallel zu den Achsen der Räder beschränkt, lediglich mit dem Zahnriemen 12 in Kontakt ist. Der Andrückblock 13, der aus einem Material mit guten Gleiteigenschaften, vorzugsweise einem geeigneten Kunststoff wie ultrahochmolekularem Niederdruckpolyethylen besteht, weist eine Andrückfläche 14 auf, mit welcher er gegen das der Zahnstange 5 gegenüberliegende untere Trum des Zahnriemens 12 drückt. Die Andrückfläche 14 weist einen geraden mittleren Abschnitt auf, der mit mehreren, z. B. drei oder vier Zähnen der Aussenverzahnung des Zahnriemens 12 überlappt und beidseitig glatt daran anschliessende konvex gekrümmte Abschnitte. Eine zwecks seitlicher Führung des Zahnriemens 12 etwas versenkt angeordnete obere Gegenfläche 15 ist genau gleich ausgebildet und steht mit dem von der Zahnstange 5 abgewandten oberen Trum des Zahnriemens 12 in Kontakt.

In der Mitte ist der Abstand zwischen der Andrückfläche 14 und der Gegenfläche 15 etwas grösser als der innere Radius - d. h. der Radius abgesehen von der Verzahnung - des Antriebsrades 10 und des Umlenkrades 11. Ausserdem ist der Achsabstand der besagten Räder so bemessen, dass der Zahnriemen 12 leicht elastisch gedehnt ist. Dadurch übt das obere Trum desselben über die Gegenfläche 15 eine elastische Kraft auf den Andrückblock 13 aus, so dass dessen Andrückfläche 14 wiederum eine gegen die Zahnstange 5 gerichtete elastische Kraft auf den mittleren Abschnitt des unteren Trums des Zahnriemens 12 ausübt, welche denselben an die Zahnstange 5 andrückt. Die Antriebseinheit 6, insbesondere die Anordnung bestehend aus dem Antriebsrad 10, dem Umlenkrad 11, dem Zahnriemen 12 und dem Andrückblock 13 ist bezüglich einer in der Mitte zwischen den Achsen der besagten Räder liegenden vertikalen Ebene im wesentlichen symmetrisch.

Im Betrieb werden die Wagen 2 jeweils durch entsprechende Ansteuerung der Motoren 7 unabhängig voneinander angetrieben und die Wagen 2 längs der Führung 1 verschoben. Das untere Trum des Zahnriemens 12 wird dabei jeweils in von der Bewegungsrichtung unabhängiger Weise, wenn es mit dem jeweils vorausliegenden konvexen Abschnitt der Andrückfläche 14 in Kontakt kommt und weiter über dieselbe gleitet, so an die Zahnstange 5 gedrückt, dass sich der Eingriff seiner äusseren Verzahnung mit derselben gegen die Mitte der Antriebseinheit 6 stetig verstärkt, über eine kurze Strecke gleichbleibt und dann stetig wieder abnimmt. Reibung zwischen den Zähnen und entsprechende Geräusche und Unregelmässigkeiten der Bewegung werden dadurch weitgehend vermieden. Durch die gegen die Zahnstange 5 gerichtete Kraft, die die Andrückfläche 14 auf den Zahnriemen 12 ausübt, ist ein zuverlässiger satter Eingriff zwischen dem letzteren und der Zahnstange 5 auch dann, wenn der vertikale Abstand zwischen dem Antriebsrad 10 und der Zahnstange 5 schwankt, stets sichergestellt. Die Elastizität des Zahnriemens 12 wirkt zusätzlich geräuschdämpfend und ausgleichend. Da er nur mit der glatten Andrückfläche 14 und der gleich ausgebildeten Gegenfläche 15 in Kontakt kommt, tritt an demselben kaum Abrieb auf.

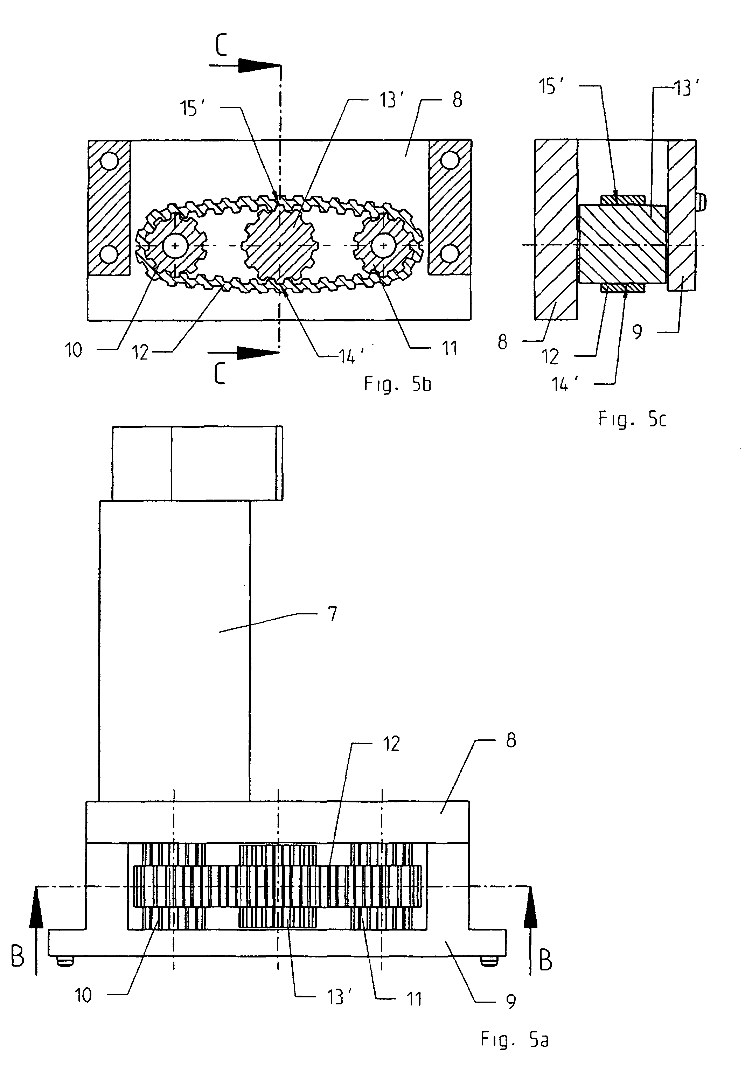

Gemäss einer geringfügig abgewandelten Ausführungsform der Antriebseinheit (Fig. 5a-c) ist das Andrückteil als Andrückrad 13' ausgebildet, ein Ritzel, das zwischen dem oberen und dem unteren Trum des Zahnriemens 12 drehbar angeordnet ist und dessen Verzahnung mit dessen innerer Verzahnung oben wie unten eingreift. Im übrigen ist seine axiale Verschieblichkeit durch von der Grundplatte 8 und der Deckplatte 9 gebildete Anschläge begrenzt. Da sein Durchmesser etwas grösser ist als der des Antriebsrades 10 und des Umlenkrades 11 und der Zahnriemen 12 wiederum geringfügig elastisch gedehnt ist, überträgt es (s. a. Fig. 6) wiederum die elastische Kraft, die das obere Trum des Zahnriemens auf seine momentane Gegenfläche 15' - der gerade mit demselben in Kontakt stehende Abschnitt seiner Umfangsfläche - ausübt, auf die gegenüberliegende momentane Andrückfläche 14' - den gerade mit dem unteren Trum in Kontakt stehenden Abschnitt seiner Umfangsfläche - und diese drückt dessen mittleren Abschnitt gegen die Zahnstange 5.

Auch hier sind die Andrückfläche 14' und die Gegenfläche 15' im wesentlichen - d. h. abgesehen von der Verzahnung - konvex und die erstere bewirkt daher einen allmählichen Eingriff der äusseren Verzahnung des Zahnriemens 12 mit der Verzahnung der Zahnstange 5. Durch den Eingriff mit dem Zahnriemen 12 ist die Lage des Andrückrades 13' in der Antriebseinheit 6 gegen Verschiebung parallel zur Zahnstange 5 fixiert. Es sind daher nach dieser Richtung keine Anschläge o. dgl. erforderlich.

Es sind verschiedene Abweichungen von den geschilderten Ausführungsbeispielen möglich. Wesentlich ist, dass ein sicherer und störungsfreier Eingriff der Antriebseinheit mit der Zahnstange erzielt wird, ohne dass dazu ein grösserer konstruktiver Aufwand erforderlich wäre. Gewährleistet wird dies im wesentlichen durch eine den Eingriff stets sicherstellende, allfällige Schwankungen des Abstandes zur Zahnstange ausgleichende Andrückvorrichtung, die vom Antrieb entkoppelt ist, so dass eine einfache achsfeste Lagerung des Antriebsrades ausreicht.

### Bezugszeichenliste

- 1: Führung
- 2: Wagen
- 3: Führungsstange
- 4: Schlitten
- 5: Zahnstange
- 6: Antriebsteil
- 7: Motor
- 8: Grundplatte
- 9: Deckplatte
- 10: Antriebsrad
- 11: Umlenkrad
- 12: Zahnriemen
- 13: Andrückblock
- 13': Andrückrad
- 14, 14': Andrückfläche
- 15, 15': Gegenfläche

## Patentansprüche

1. Verschiebeeinrichtung mit einer Zahnstange (5) sowie mit mindestens einem längs dieser Zahnstange verfahrbaren Wagen (2) mit einer Antriebseinheit (6), wobei diese Antriebseinheit ein als Zahnrad ausgebildetes Antriebsrad (10) umfasst, dessen Achse etwa senkrecht zur Zahnstange (5) ausgerichtet ist, **dadurch gekennzeichnet, dass** die Antriebseinheit (6) eine Andrückvorrichtung umfasst sowie einen beidseitig verzahnten, geschlossenen Zahnriemen (12), der derart um das Antriebsrad (10) und eine von demselben beabstandete Umlenkung läuft, dass seine innere Verzahnung mit der Verzahnung des Antriebsrades (10) und seine äussere Verzahnung mit der Verzahnung der Zahnstange (5) eingreift, wobei die Andrückvorrichtung ein gegen diese Zahnstange bewegliches Andrückteil (13,13') umfasst, welches auf die Innenseite eines mit der Zahnstange (5) eingreifenden Abschnitts des Zahnriemens (12) einen gegen die Zahnstange (5) gerichteten Druck ausübt, wobei der Zahnriemen (12) elastisch dehnbar und in elastisch gedehntem Zustand eingebaut ist, und wobei der Zahnriemen mit je einer Andrückfläche (14,14') und Gegenfläche (15,15') des Andrückteils (13,13') so in Wechselwirkung steht, dass das von der Zahnstange (5) abgewandte Trum des Zahnriemens (12) über die Gegenfläche (15,15') eine elastische Kraft auf das Andrückteil (13,13') ausübt, wodurch über dessen Andrückfläche (14,14') wiederum eine gegen die Zahnstange (5) gerichtete elastische Kraft auf den mittleren Abschnitt des unteren Trums des Zahnriemens (12) ausgeübt wird, so dass der untere Trum gegen die Zahnstange (5) angedrückt wird.

2. Verschiebeeinrichtung nach Anspruch 1, **dadurch gekennzeichnet, dass** die Andrückvorrichtung zwischen dem Antriebsrad (10) und der Umlenkung angeordnet ist.

3. Verschiebeeinrichtung nach Anspruch 1 oder 2, **dadurch gekennzeichnet, dass** die Umlenkung als zum Antriebsrad (10) achsparallel und in der Richtung der Zahnstange (5) versetzt drehbar in der Antriebseinheit (6) gelagertes, vorzugsweise als mit der inneren Verzahnung des Zahnriemens (12) eingreifendes Zahnrad ausgebildetes Umlenkrad (11) ausgebildet ist.

4. Verschiebeeinrichtung nach einem der Ansprüche 1 bis 3, **dadurch gekennzeichnet, dass** die Andrückfläche (14, 14') des Andrückteils (13,13') einen - gegen die Zahnstange (5) gerichteten, mindestens teilweise mit der Innenseite des der Zahnstange zugewandten Trums des Zahnriemens (12) in Kontakt befindlichen - Teil aufweist, welcher mindestens abschnittweise im Wesentlichen konvex ist.

5. Verschiebeeinrichtung nach Anspruch 4, **dadurch gekennzeichnet, dass** das Andrückteil ein unverdrehbarer Andrückblock (13) ist, dessen Andrückfläche (14) zwei konvexe Abschnitte aufweist, zwischen denen ein gerader Abschnitt liegt.

6. Verschiebeeinrichtung nach Anspruch 5, **dadurch gekennzeichnet, dass** der gerade Abschnitt der Andrückfläche (14) mit mehreren Zähnen an der Aussenseite des Zahnriemens (12) überlappt.

7. Verschiebeeinrichtung nach einem der Ansprüche 4 bis 6, **dadurch gekennzeichnet, dass** die Anordnung bestehend aus dem Antriebsrad (10), dem Umlenkrad (11), dem Zahnriemen (12) und dem Andrückblock (13) bezüglich einer in der Mitte zwischen den Achsen der besagten Räder liegenden vertikalen Ebene im wesentlichen symmetrisch ist.

8. Verschiebeeinrichtung nach Anspruch 4, **dadurch gekennzeichnet, dass** das Andrückteil ein drehbares Andrückrad (13') ist.

9. Verschiebeeinrichtung nach Anspruch 8, **dadurch gekennzeichnet, dass** das Andrückrad (13') als mit der inneren Verzahnung des Zahnriemens (12) im Bereich der Andrückfläche (14') und im Bereich der Gegenfläche (15') eingreifendes Ritzel ausgebildet ist.

10. Verschiebeeinrichtung nach Anspruch 9, **dadurch gekennzeichnet, dass** das Andrückrad (13') über die Andrückfläche (14') und die Gegenfläche (15') mit dem der Zahnstange zugewandten und abgewandten Trum des Zahnriemens (12) in dauerndem Eingriff steht und dadurch freitragend bzw. achsfrei gehalten ist.

11. Verschiebeeinrichtung nach einem der Ansprüche 1 bis 10, **dadurch gekennzeichnet, dass** sie eine zur Zahnstange (5) parallele, vorzugsweise als Führungsstange (3) runden Querschnitts ausgebildete Führungsschiene umfasst und der Wagen (2) einen Schlitten (4) umfasst, welcher mit der Führungsschiene eingreift.

12. Verschiebeeinrichtung nach einem der Ansprüche 1 bis 11, **dadurch gekennzeichnet, dass** sie mehrere Wagen (2) umfaßt, welche unabhängig voneinander antreibbar und längs einer Führung (1) verschiebbar sind.

## Claims

1. Sliding device with a gear rack (5) and one or more carriages (2) with a drive unit (6) traversing along said gear rack, whereby said drive unit comprises a drive wheel (10) in the form of a gear wheel whose axis is aligned approximately at right angles to said gear rack, **characterized in that** said drive unit comprises a pressure device and a looped belt toothed on both sides (12) that runs round said drive wheel (10) and an offset spaced from said drive wheel in such a way that its inner gear teeth engage with the gear teeth of said drive wheel (10) and its outer gear teeth with the gear teeth of said gear rack (5), whereby said pressure device comprises a pressure part (13,13') that moves against said gear rack and exerts a pressure directed against said gear rack on the inner side of a section of said toothed belt (12) engaging with said gear rack, whereby said toothed belt (12) is elastically stretchable and fitted in an elastically stretched state, and whereby said toothed belt interacts with a pressure face (14,14') and a counter face (15,15') of said pressure part (13, 13') so that the strand of said toothed (12) belt facing away from said gear rack (5) exerts an elastic force through said counter face (15, 15') on said pressure part (13, 13') as a result of which, through said pressure face (14, 14'), an elastic force directed against said gear rack (5) is in turn exerted on the center section of the bottom strand of said toothed belt (12) so that said bottom strand is pressed against said gear rack (5).

2. Sliding device according to claim 1 **characterized in that** the pressure device is arranged between the drive wheel (10) and the offset.

3. Sliding device according to claim 1 or 2 **characterized in that** the offset is in the form of an offset wheel (11) axially parallel to the drive wheel (10) and rotatable in the drive unit (6) offset in the direction of the gear rack (5), preferably as a gear wheel engaging with the inner gear teeth of the toothed belt (12).

4. Sliding device according to one of the claims 1 to 3 **characterized in that** the pressure face (14,14') of the pressure part (13,13') exhibits a part, directed against the gear rack (5) and at least partially contacting the inner side of the strand of the toothed belt (12) facing said gear rack, that is at least in part essentially convex.

5. Sliding device according to claim 4 **characterized in that** the pressure part is a locked pressure block (13) whose pressure face (14) exhibits two convex sections between which there is a straight section.

6. Sliding device according to claim 5 **characterized in that** the straight section of the pressure face (14) overlaps with several teeth on the outer side of the toothed belt (12).

7. Sliding device according to one of the claims 4 to 6 **characterized in that** the arrangement consisting of the drive wheel (10), the offset wheel (11), the toothed belt (12) and the pressure block (13) is essentially symmetrical in relation to a vertical plane in the middle between the axes of said wheels.

8. Sliding device according to claim 4 **characterized in that** the pressure part is a rotatable pressure wheel (13').

9. Sliding device according to claim 8 **characterized in that** the pressure wheel (13') is in the form of a pinion engaging with the inner gear teeth of the toothed belt (12) in the region of the pressure face (14') and in the region of the counter face (15').

10. Sliding device according to claim 9 **characterized in that** the pressure wheel (13') is permanently engaged through the pressure face (14') and the counter face (15') with the strand of the toothed belt (12) facing and facing away from the gear rack (5) and consequently is self-supporting or free of the axis.

11. Sliding device according to one of the claims 1 to 10 **characterized in that** it comprises a guide rail parallel to the gear rack (5), preferably in the form of a guide rod (3) of round cross-section, and that the carriage (2) comprises a slide (4) that engages with said guide rail.

12. Sliding device according to one of the claims 1 to 11 **characterized in that** it comprises several carriages (2) that can be driven independently of one another and slide along a guide (1).

## Revendications

1. Dispositif coulissant comprenant une crémaillère (5) et au moins un chariot (2), pouvant se déplacer le long de cette crémaillère, muni d'un mécanisme d'entraînement (6), ce mécanisme d'entraînement comprenant une roue d'entraînement (10) conçue comme une roue dentée dont l'axe est orienté à peu près perpendiculairement à la crémaillère (5), **caractérisé en ce que** le mécanisme d'entraînement (6) comprend un dispositif de pression ainsi qu'une courroie dentée (12) fermée, endentée des deux côtés, passant de telle façon autour de la roue d'entraînement (10) et autour d'un coudage se trouvant à une certaine distance de celle-ci, que sa denture interne est en prise avec la denture de la roue d'entraînement (10) et que sa denture externe est en prise avec la denture de la crémaillère (5), le dispositif de pression comportant un élément de pression (13,13') mobile par rapport à cette crémaillère, qui exerce, sur le côté interne d'une section de la courroie dentée (12) se trouvant en prise avec la crémaillère (5), une pression orientée contre la crémaillère (5), la courroie dentée (12) pouvant s'allonger de façon élastique et étant insérée en état d'allongement élastique, et la courroie dentée (12) étant en interaction avec respectivement une surface de pression (14,14') et une contresurface (15,15') de l'élément de pression (13,13'), de sorte que le brin de la courroie dentée (12) opposé à la crémaillère (5) exerce une force élastique sur l'élément de pression (13,13') via la contresurface (15,15'), au moyen de quoi une force élastique orientée contre la crémaillère (5) est à son tour exercée, via la surface de pression (14,14'), sur la section médiane du brin inférieur de la courroie dentée (12), de sorte que le brin inférieur est pressé contre la crémaillère (5).

2. Dispositif coulissant selon la revendication 1, **caractérisé en ce que** le dispositif de pression est placé entre la roue d'entraînement (10) et le coudage.

3. Dispositif coulissant selon la revendication 1 ou 2, **caractérisé en ce que** le coudage est conçu comme une roue de renvoi (11) placée dans l'unité d'entraînement (6) parallèlement à l'axe de la roue d'entraînement (10) et pouvant tourner de façon décalée dans le sens de la crémaillère (5), cette roue de renvoi (11) étant de préférence conçue comme une roue dentée s'enclenchant avec la denture interne de la courroie dentée (12).

4. Dispositif coulissant selon l'une des revendications 1 à 3, **caractérisé en ce que** la surface de pression (14,14') de l'élément de pression (13,13') comprend une partie (dirigée contre la crémaillère (5) et se trouvant, au moins partiellement, en contact avec la face interne du brin de la courroie dentée (12) tourné vers la crémaillère) dont au moins des sections sont essentiellement convexes.

5. Dispositif coulissant selon la revendication 4, **caractérisé en ce que** l'élément de pression est un bloc de pression (13) ne pouvant pas pivoter, dont la surface de pression (14) comporte deux sections convexes entre lesquelles se trouve une section droite.

6. Dispositif coulissant selon la revendication 5, **caractérisé en ce que** la section droite de la surface de pression (14) dépasse de plusieurs dents la surface externe de la courroie dentée (12).

7. Dispositif coulissant selon l'une des revendications 4 à 6, **caractérisé en ce que** la structure composée de la roue d'entraînement (10), de la roue de renvoi (11), de la courroie dentée (12) et du bloc de pression (13) est en grande partie symétrique par rapport à un plan vertical situé au milieu entre les axes desdites roues.

8. Dispositif coulissant selon la revendication 4, **caractérisé en ce que** l'élément de pression est une roue de pression pivotante (13').

9. Dispositif coulissant selon la revendication 8, **caractérisé en ce que** la roue de pression (13') est conçue comme un pignon s'engrenant avec la denture interne de la courroie dentée (12), dans la zone de la surface de pression (14') et dans la zone de la contresurface (15').

10. Dispositif coulissant selon la revendication 9, **caractérisé en ce que** la roue de pression (13') est en prise permanente, par le biais de la surface de pression (14') et de la contresurface (15'), avec le brin de la courroie dentée (12) tourné vers la crémaillère et avec celui opposé à celle-ci, et est ainsi maintenue de façon indépendante et sans axe.

11. Dispositif coulissant selon l'une des revendications 1 à 10, **caractérisé en ce qu'**il comprend un rail de guidage parallèle à la crémaillère (5), conçu de préférence comme une tige de guidage (3) à section circulaire, et **en ce que** le chariot (2) comprend un coulisseau (4) avec lequel s'engrène le rail de guidage.

12. Dispositif coulissant selon l'une des revendications 1 à 11, **caractérisé en ce qu'**il comprend plusieurs chariots (2) pouvant être actionnés indépendamment les uns des autres et pouvant coulisser le long d'un guide (1).
